# EUROPEAN PATENT SPECIFICATION

(11) **EP 1 640 784 B1**
(45) Date of publication and mention of the grant of the patent: **12.11.2008**
(21) Application number: 05019919.9
(22) Date of filing: 13.09.2005
(51) Int. Cl.: G02B 27/28, G02B 26/10, H04N 1/06

(54) **Apparatus for scanning a inner drum face**
Gerät zum Abtasten einer inneren Trommelfläche
Dispositif de balayage de la face interne d'un tambour

(30) Priority: 22.09.2004 JP 2004276167
(43) Date of publication of application: 29.03.2006
(73) Proprietor: FUJIFILM Corporation, Minato-ku Tokyo (JP)
(72) Inventor: Miyagawa, Ichirou, Ashigarakami-gun Kanagawa (JP)
(74) Representative: Klunker . Schmitt-Nilson . Hirsch

(56) References cited:
- US-A- 5 636 049
- US-A- 5 701 201
- US-A- 5 883 746

## Description

### BACKGROUND OF THE INVENTION

### Field of the Invention

The present invention relates to an inner drum exposure device (inner surface scanning-type optic beam scanning exposure device) according to the preamble of claim 1. It scans a photosensitive surface positioned at the inner surface of a cylindrical drum and performs exposure processing with a laser beam scanning optical system. An exposure device of this type is known from US 5, 636, 049.

### Description of the Related Art

In general, inner drum exposure devices (inner surface scanning-type optic beam scanning exposure devices) that perform scanning exposure processing by conducting the light beams of a laser and the like with an optical deflector are widely used. In these devices, light beams are conducted to the photosensitive surface of a recording medium positioned on the inner periphery surface of a cylindrical drum. The recording medium on which an image was exposed and recorded is placed on an automatic processor when necessary, and a latent image formed on the recording medium is converted into a viewable image. In order to make high-speed exposure processing possible with this type of inner drum exposure device, it is necessary to employ a multi-beam system in the device.

Among the conventional techniques for making an inner drum exposure device a multi-beam device, there is a system that utilizes polarized light. The inner drum exposure device of this type of system is configured such that a Wollaston prism, which is a separate element, is positioned in front of the spinner of an optical deflector so the angles of the two beams using polarized light are split. There have been proposals involving irradiation by the juxtaposition of two beams in a sub-scanning direction at any position of main scanning on a scanning surface (e.g., refer to Official Gazette of Japanese Patent Application Laid-Open (JP-A) No. 5-27188).

The Wollaston prism used to make this inner drum exposure device a multi-beam device is configured with two strips of calcite, whose refractive index anisotropy is great, glued together as the prism material. This Wollaston prism is made by gluing the respective inclined plane portions of two types of prisms providing inclined planes in directions differing from the crystal optical axis of the calcite.

This Wollaston prism is characterized by the fact that it is expensive, heavy, and the angle of separated light is large. When using this Wollaston prism in an inner drum exposure device, the separation interval of the sub-scanning direction on the scanning surface becomes extremely removed because the separation angle of the light beams is large. For instance, with an inner drum exposure device where beams are irradiated at two positions that are separated far apart, it takes time for one beam to draw next to the other beam after the other beam draws. For this reason, the device is easily affected by factors such as speed irregularities and unevenness when the optical deflector moves in the sub-scanning direction or vibrations of the optical deflector. As a result, it is easy for recording irregularities to occur and it becomes extremely difficult to produce the accuracy of the separated intervals.

Further, this requires the loading of a heavy object on the spinner. Since this limits the rotation speed, a problem occurs in that exposure speed is reduced.

### SUMMARY OF THE INVENTION

In light of the above-described problems, the present invention newly provides an inner drum exposure device by which recording irregularities can be suppressed and separation interval accuracy improved. Further, with the present invention, the weight is reduced when providing a separating element at the spinner of an optical deflector, and reductions in rotation and exposure speeds are prevented. Furthermore, the exposure scanning system can be manufactured at low cost.

The inner drum exposure device of the present invention comprises the features of claim 1. Preferred embodiments are defined by the dependent claim.

In the inner drum exposure device of the present invention, the quarter wavelength plate and uniaxial crystal can be made to be uniform and set at a rotational axis component of an optical deflector arranged at the scanning optical system.

In the inner drum exposure device of the present invention, the uniaxial crystal can be formed into a planar plate and the direction of the refractive index of extraordinary light inclined relative to the normal line of the incident surface.

In the inner drum exposure device of the present invention, the angle of inclination of the refractive index of extraordinary light can be approximately 45°.

By configuring the invention as described above, two laser beams projected from the optical system on the light source side are each made independent, modulated, polarized, and integrated based on image signals; these are then made into right-handed circularly polarized light and left-handed circularly polarized light and projected towards a scanning optical system. After converting the laser beams into linearly-polarized light beams that cross each other with the quarter wavelength plate of the scanning optical system, the ejected beams of principal rays are each projected from differing positions so as to be parallel with a uniaxial crystal. These can not only be focused at short preset pixel intervals on a recording media in the sub-scanning direction, but also in a state where the separation interval between the two laser beams is in a highly accurate state, so that exposure processing can be performed simultaneously with two laser beams. Further, this uniaxial crystal can be manufactured at a low price from a material such as quartz, thus making the provision of a reasonably priced product.

By configuring the invention as described in claim 1, in addition to the above-described effects, the weight of the optical deflector can be kept low and limitations on rotation speed suppressed. The relative rotation positions of the quarter wavelength plate and the uniaxial crystal in relation to the rotational axis component having the reflective surface of the optical deflector can be adjusted. The intervals between the sub-scanning laser beam spots on the scanning surface of the recording medium can be adjusted as well.

The inner drum exposure device of the present invention can have a detecting component arranged so as to detect the positions of each focusing spot of the two laser beams polarized and integrated with the polarized light beam splitter of the optical system on the light source side. The present invention can also have an adjusting component, arranged at the optical system of the light source side, that adjusts the angle of at least one laser beam and adjusts so that a position difference between the two laser beams detected with the detecting component becomes a preset value.

In the inner drum exposure device of the present invention, the adjusting component that adjusts the angle of the laser beam can perform adjustment when a recording medium is not being exposure recorded.

By configuring the invention as described above, coaxial integration of the two laser beams can be performed with high precision. Changes in interval positioning of the beam spots on the scanning surface relative to the rotational angle of the optical deflector can be prevented.

In the inner drum exposure device of the present invention, a polarized light control element that controls the direction of each polarized light beam and a splitting element that splits each light beam that passes through the polarized light control element in the sub-scanning direction can be set on the optical path. These can be set on the downstream side from the quarter wavelength plate arranged on the optical path of the scanning optical system and the uniaxial crystal. The polarized light control element can be arranged so as to split each light beam in the sub-scanning direction with the splitting element at approximately uniform luminosities.

By configuring as described above, a first light beam and a second light beam are separated with the quarter wavelength plate and the uniaxial crystal and each of these separated first and second light beams are respectively split with a polarized light control element and a splitting element so that the focusing spots overlap adjacently at approximately even luminosities in the sub-scanning direction. Due to this, the first and second light beams are each brought even closer to shorter shapes in the sub-scanning direction, and the condition of the shapes of the spots becomes focused and sharpened relative to the main-scanning direction as well. This makes it possible to increase the quality of the recording pixels.

With the present invention, recording irregularities can be suppressed and separation interval accuracy improved. Further, the weight is reduced when providing a separating element at the spinner of an optical deflector, and reductions in rotation and exposure speeds are prevented. The present invention can thus provide an inner drum exposure device equipped with an affordable exposure scanning system.

### BRIEF DESCRIPTION OF THE DRAWINGS

Fig. 1 is a schematic structural diagram showing the inner drum exposure device of embodiments of the present invention;
Fig. 2 is an explanatory diagram showing the action of an optic element of a uniaxial crystal used in the inner drum exposure device of a first embodiment of the present invention;
Fig. 3 is a graph showing the relation between the angle of inclination of the crystal optical axis and the width of division in a case where quartz is used for the optic element of the uniaxial crystal used in an inner drum exposure device of embodiments of the present invention;
Fig. 4 is a schematic structural diagram showing a cross-section of another structural example relating a quarter wavelength plate and an optic element of a uniaxial crystal attached to a spinner mirror device used in an inner drum exposure device of embodiments of the present invention; and
Fig. 5 is a schematic structural diagram showing yet another structural example relating to the scanning optical system of the spinner mirror device used in an inner drum exposure device of embodiments of the present invention.

### DETAILED DESCRIPTION OF THE INVENTION

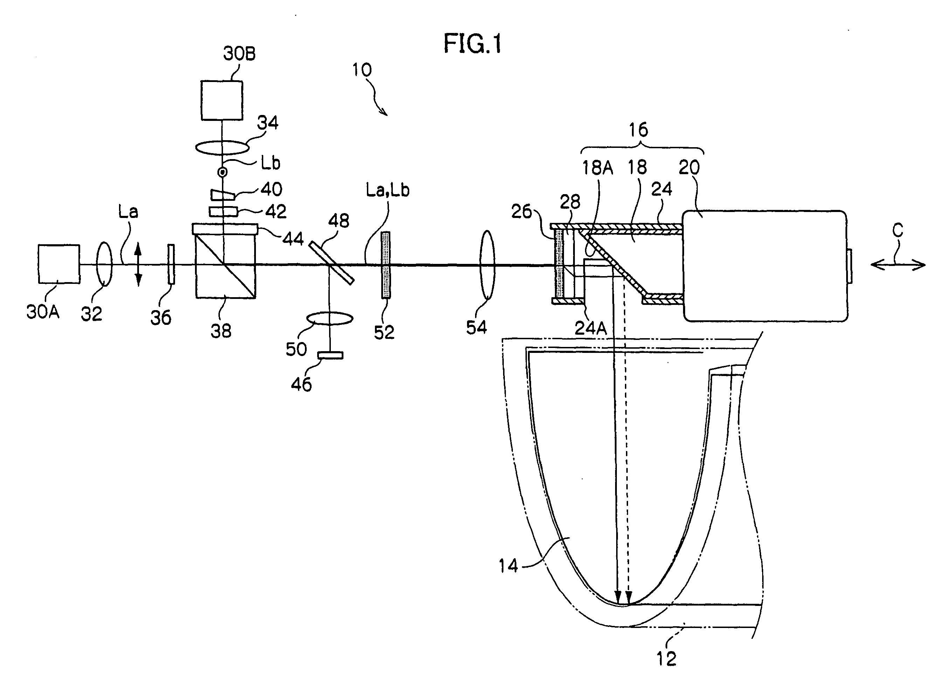

The inner drum exposure device of embodiments of the present invention will be explained while referring to Figs. 1 through 5. As shown in the schematic structural diagram of Fig. 1, an inner drum exposure device 10 constitutes a support 12 having an inner peripheral surface of a circular arc shape serving as the base (i.e., the shape constituting one portion of the cylindrical inner periphery surface). This support 12 is configured to support a recording medium 14 (e.g., a photopolymer plate, a conventional PS plate, or a silver salt type photosensitive material) along the surface of its inner periphery.

With this inner drum exposure device 10, an unrecorded recording medium 14 is fed by the supplying/discharging device of the recording medium 14 and after the recording medium 14 is made to cohere with certainty along the inner periphery surface of the support 12 and attached thereto, exposure processing is performed. Further, an operation is performed for any recording medium 14 that has undergone exposure processing in which the recording medium 14 discharged from the support 12 to the exterior.

This inner drum exposure device 10 has a spinner mirror device 16 that acts as a scanning component provided at the center position of the circular arc of the support 12. This spinner mirror device 16 is configured so that the central axis of a column-shaped rotary shaft element 18 acts as the rotational axis (unified with the circular central axis of the support 12) and is turnable with a motor 20 that is a drive source. A reflective mirror surface 18A forming a 45° angle relative to the line of the rotational axis is formed at the edge portion of the rotary shaft element 18 of the spinner mirror device 16.

The spinner mirror device 16 acting as the scanning component is moved at a constant velocity in the axial line direction of the circular central axis of the support 12 (the direction of arrow C in Fig. 1) by a sub-scanning moving component. In this spinner mirror device 16, rotational control of the motor 20 is performed by a spinner driver while movement control in the sub-scanning direction is performed by the sub-scanning moving component.

Moreover, this inner drum exposure device 10 is configured so as to perform beam splitting and main scanning on the recording surface of the recording medium 14 positioned on the inner periphery surface of the support 12.

Accordingly, at the side of the spinner mirror device 16 there is a holder 24 fixed so as to turn uniformly with the rotary shaft element 18. A quarter wavelength plate 26 and a uniaxial crystal optic element 28 are fixed and positioned in this order from the upstream side of the optical path. This holder 24 is formed in, for example, a cylindrical shape and has an aperture 24A formed therein through which light beams reflected by the reflective mirror surface 18A pass to the side of the recording medium 14.

The quarter wavelength plate 26 and the uniaxial crystal optic element 28 are set in the spinner mirror device 16 in the optical path in front of the reflective mirror surface 18A. These can be configured to be attached so as to turn uniformly with the reflective mirror surface 18A due to a separately provided support component.

The quarter wavelength plate 26 is configured such that the respective light beams of right-handed circularly polarized light and left-handed circularly polarized light are convertible into beams of linearly-polarized light that are orthogonal to each other.

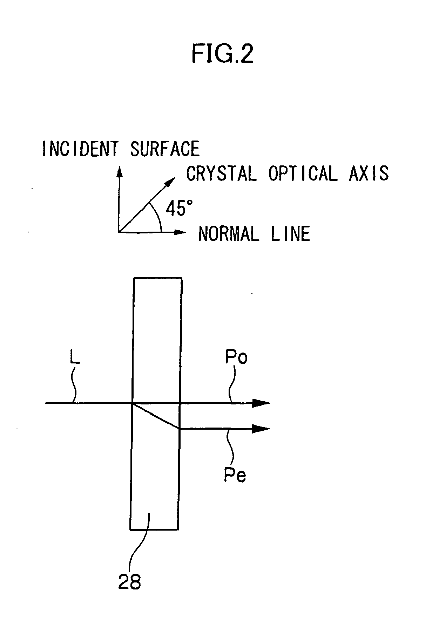

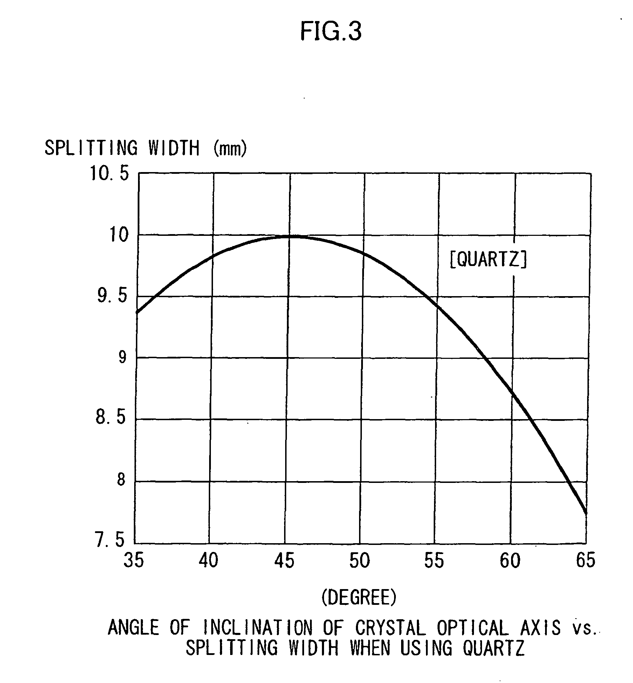

The uniaxial crystal optic element 28 is configured from a quartz plate that shifts the two principal rays of orthogonal linearly-polarized light into parallel rays. As shown in Fig. 2, the quartz plate is made to have a structure where the crystal optical axis of the quartz is inclined at 45° relative to the normal line of the light's crystal incident surface. When using such a quartz plate in the spinner mirror device 16 of the inner drum exposure device 10, if the thickness of the quartz plate is made to be 1.740 mm, the first laser beam La and the second laser beam Lb can be focused in the sub-scanning direction so as to be separated at 1-pixel intervals (10.58 µm). When making the precision of the separated intervals 0.1 µm, the thickness precision can be made to be in the range of ±18 µm. Accordingly, it is simple to process this quartz plate so as to have sufficient precision and is possible to manufacture at low cost. Further, the quartz used as the material for the uniaxial crystal optic element 28 is advantageous in that the material itself is stable and obtainable at low cost. Furthermore, the quartz used as the material for the uniaxial crystal optic element 28 has the characteristic of the splitting width relative to the angle of inclination of the crystal optical axis shown in Fig. 3, so the uniaxial crystal optic element 28 can be formed to have the desired function in accordance with this characteristic.

It should be noted that the uniaxial crystal optic element 28 can comprise a uniaxial crystal besides quartz as the material. When configuring the invention with a uniaxial crystal other than quartz, by making the crystal optical axis 45°, it is possible to make the processing error of the angle of inclination in the range of ±1° and suppress deviations in the width of separation.

This uniaxial crystal optic element 28 can be formed so as to use a uniaxial material such as calcite or lithium niobate. In cases where calcite is used, the thickness can be thinned and the weight kept low, and is thus beneficial in that limitations on the rotation speed of the spinner mirror device 16 can be suppressed. In this case, it is preferable to use the quarter wavelength plate 26 and uniaxial crystal optic element 28 after setting the angle and adhering these.

When incident circularly-polarized light beams with the uniaxial crystal optic element 28 configured as described above, the light beams are split by luminosity into, e.g., an ordinary light ray Po and an extraordinary light ray Pe, as shown in Fig. 2. In this case, the ordinary light ray Po and extraordinary light ray Pe are shifted so as to be parallel to each other.

As shown in Fig. 1, the inner drum exposure device 10 is provided with an optical system at the light source side that projects light beams to the spinner mirror device 16 side in order to perform beam splitting and main-scanning on the recording surface of the recording medium 14.

First and second (i.e., two) semiconductor laser light sources 30A, 30B (i.e., light beam-outputting components) are used in the present inner drum exposure device. That is, the first and second semiconductor laser light sources 30A, 30B respectively eject linearly-polarized light beams (laser beams) La, Lb so both of these light beams La, Lb are respectively made into parallel beams by their respective collimating lenses (collimator lenses).

The first laser beam La ejected from this first semiconductor laser light source 30A is set so as to become P polarized light relative to the polarized beam splitter 38 and after transmitting through a parallel plate 36, it transmits through the polarized beam splitter 38 and proceeds.

Further, after the second laser beam Lb passes through two angle-adjusting prisms 40, 42, the polarized light direction is rotated 90° due to transmission through the half wavelength plate 44 and is made incident to the polarized beam splitter 38 after becoming S polarized light. The second laser beam Lb becomes S polarized light and is reflected by the reflective surface of the polarized beam splitter 38 and becomes coaxially integrated with the first laser beam La and proceeds along the same optical path that leads to the spinner mirror device 16.

With the optical system of the light source side of the inner drum exposure device 10, in addition to when adjusting at assembly, it is necessary afterwards to correct portions that deviate with the passage of time. This is due to the fact that if coaxial integration of the first laser beam La and the second laser beam Lb is not performed with high accuracy, a problem occurs where it responds to the angle of rotation of the optical deflector and the position intervals between the beam spots a, b on the scanning surface change.

Here, in the light source side optical system, a beam position sensing detector (PSD) 46 is set on the optical path at the side downstream from the polarized beam splitter 38. For this reason, a beam splitter 48 is set at a predetermined position on the optical path on the side downstream from the polarized beam splitter 38. Due to this, a portion of the light of the first laser beam La and the second laser beam Lb is reflected and focused with a light focusing lens 50 on a PSD 46 set in a position corresponding to the scanning surface. It is configured so that the positions of the first laser beam La and the second laser beam Lb are detectable on the scanning surface.

With regard to deviations in beam spot positioning on the scanning surface, due to the fact that a resolution of 0.1 µm or less is necessary from the viewpoint of picture quality irregularity control, when the detection resolution of the PSD 46 is considered, it is preferable that it be configured such that changes in beam spot positioning on the PSD be magnified 10 times or more.

In cases where beam position detection is performed with this PSD 46, the first laser beam La and the second laser beam Lb are respectively lit (i.e., illuminated) separately at preset luminosities and individually detected and sought when exposure recording is not being performed on the recording medium. This PSD 46 is provided with a circuit that divides by the entire luminosity or a circuit that corrects with calculations after data acquisition. The PSD 46 is provided with such a circuit so that, when detecting positions, no deviations in position information occur between the first laser beam La and the second laser beam Lb due to differences in luminosity.

With this inner drum exposure device 10, when not performing exposure recording on the recording medium, position deviations between the first laser beam La and the second laser beam Lb are made to be either 0 or positions separated at a preset value based on the position information detected by the PSD 46. This is done by adjusting the angles of the two angle adjusting prisms 40, 42 placed on the optical path of the second laser beam Lb.

The preset value that is the amount of position deviation between the first laser beam La and the second laser beam Lb is set in the inner drum exposure device 10 in advance prior to shipping. This is done by exposing the recording medium and seeking the area in which there is no change or fluctuation in the two beam intervals over the main scanning direction.

Further, the situation where this preset value does not become 0 is when the principal rays of the first laser beam La and the second laser beam Lb parallel shift even a little bit. When this occurs, it is because the reflective angles of the first laser beam La and the second laser beam Lb deviate a bit in response to the accuracy of the flat surface, especially when reflecting with the reflecting mirror. That is, with this inner drum exposure device 10, different angle deviations occur in the optical path after the second laser beam Lb is reflected by the polarized beam splitter 38 and in the optical path after the first laser beam La is transmitted, thus making correction necessary. Here, with this inner drum exposure device 10, at the time of assembly and adjustment, by adjusting the angle of this inclination with the parallel plate 36 set on the optical path of the first laser beam La, the amount of parallel shift of the principal rays of the first laser beam La and the second laser beam Lb are adjusted to approach 0.

By adjusting as described above so that the first laser beam La and the second laser beam Lb are coaxially integrated with high precision, these pass through a quarter wavelength plate 52 placed on the optical path after beam formation and astigmatism gap correction with a cylinder lens group placed on the optical path, and after expanding the beams to the desired diameters with a beam expander.

The optical axis of this quarter wavelength plate 52 is inclined 45° relative to the direction of the linearly-polarized light of the first laser beam La and the second laser beam Lb. For this reason, the coaxially integrated first laser beam La and second laser beam Lb that pass through the quarter wavelength plate 52 are respectively converted into right-handed circularly polarized light and left-handed circularly polarized light and pass through a light focusing lens 54 in order to make a focal point on the scanning surface. These polarized light beams proceed approximately parallel to the rotational axis of the reflective mirror surface 18A of the spinner mirror device 16, and are conducted to the spinner mirror device 16 of the scanning optical system provided with the quarter wavelength plate 26 and the uniaxial crystal optic element 28.

The first laser beam La and second laser beam Lb turned into right-handed circularly polarized light and left-handed circularly polarized light are incidented into the spinner mirror device 16 of the scanning optical system from the optical system on the light source side. These light beams are converted into linearly polarized light beams that are mutually perpendicular (orthogonal) due to transmission through the quarter wavelength plate 26, after which they are made incident to the uniaxial crystal optic element 28.

When the first laser beam La and second laser beam Lb converted in this manner into orthogonal linearly polarized light beams are transmitted through the uniaxial crystal optic element 28 of the scanning optical system, the principal ray is parallel shifted in the sub-scanning direction, after which it is reflected by the reflective mirror surface 18A of the optical deflector, and focused at a position on the scanning surface of the recording medium 14 separated only by one recording pixel portion of the sub-scanning direction.

Further, this inner drum exposure device 10 separately provides a laser driver for the first semiconductor laser light source 30A and a laser driver for the second semiconductor laser light source 30B. Each image signal separately generated by a central control device is sent to each laser driver and drive control of the respective first semiconductor laser light source 30A and second semiconductor laser light source 30B is performed. The first laser beam La and second laser beam Lb are modulated based on each corresponding image signal are ejected (i.e., outputted) and irradiated on the scanning surface of the recording medium 14 with the optical system of the light source side and the spinner mirror device 16 of the scanning optical system.

Further, while this is occurring, the central control device controls the motor 20 to rotate and rotates the reflective mirror surface 18A. The first laser beam La and second laser beam Lb incidented to the reflective mirror surface 18A of the scanning optical system from the optical system on the light source side are reflected. These are reflected such that scanning exposure in the main scanning direction relative to the recording medium 14 is performed while a control signal is sent to the spinner driver. The spinner driver, which receives this control signal, controls a sub-scanning moving component and moves the spinner mirror device 16 towards the axial line direction of the circular central axis of the support 12 (i.e., the direction of arrow C in Fig. 1 moving in the left and right directions) and scans. Due to this, the invention is configured such that scanning exposure is performed with the spinner mirror device 16 in the main scanning direction while moving the spinner mirror device 16 in the sub-scanning direction, whereby recording processing of a two-dimensional image is performed relative to the entire recording surface of the recording medium 14.

Next, explanations will be given regarding the action and performance of an inner drum exposure device of the present embodiment.

With this inner drum exposure device 10, the outputted first laser beam La is modulated in accordance with image information by the first semiconductor light source 30A, which is controlled by the central control device and the laser driver. After turning it into a parallel beam with the collimating (collimator) lens 32 and making it pass through the parallel plate 36, it is made incident to the polarized beam splitter 38. At this time, the first laser beam La becomes P polarized light relative to the reflective surface of the polarized beam splitter 38 so it transmits through the polarized beam splitter 38 and proceeds.

Further, the outputted second laser beam Lb is modulated in accordance with image information by the second semiconductor light source 30B and turned into a parallel beam with the collimating (collimator) lens 32. After passing through the two angle adjusting prisms 40, 42, the polarized light direction is rotated 90° by transmission through the half wavelength plate 44, and is made incident to the polarized beam splitter 38 after becoming S polarized light.

Next, the second laser beam Lb, which becomes S polarized light, is reflected by the reflective surface of the polarized beam splitter 38 so as to become coaxially integrated with the first laser beam La, and proceeds on the same optical path to the spinner mirror device 16.

The first laser beam La and second laser beam Lb coaxially integrated in this manner pass through the quarter wavelength plate 52 and are respectively converted into right-handed circularly polarized light and left-handed circularly polarized light and pass through a light focusing lens 54 in order to make a focal point on the scanning surface. These polarized light beams are conducted to the spinner mirror device 16 of the scanning optical system provided with the quarter wavelength plate 26 and the uniaxial crystal optic element 28.

The first laser beam La and second laser beam Lb, converted into right-handed circularly polarized light and left-handed circularly polarized light, are converted into light beams of linearly-polarized light intersecting each other upon passing through the quarter wavelength plate 26 of the scanning optical system, and incidented to the uniaxial crystal optic element 28. After separating so that the principal ray in the linearly polarized light beams that intersect each other makes a parallel shift in the sub-scanning direction, these light beams are introduced along the rotational axis line of the spinner mirror device 16, reflectively polarized by the reflective mirror surface 18A, and conducted to the recording medium 14.

Next, comparative examples will be explained in order to clarify the advantages of configuring the uniaxial crystal optic element 28 from quartz as a separating element placed in front of the spinner mirror device 16 that is an optical deflector in this inner drum exposure device 10.

As a comparative example, the uniaxial crystal optic element 28 acting as a separating element positioned in front of the spinner mirror device 16, which is an optical deflector in this inner drum exposure device 10, can be formed from a Wollaston prism. Wollaston prisms are applied to uses where the regular separation angle is large. Even Wollaston prisms with small separation angles currently available on the market have angles of 5°. Accordingly, if such a prism is used under the same conditions and the distance from the central axis of the polarizing mirror to the scanning surface is made to be 275 mm, the first laser beam La and the second laser beam Lb deviate up to 24 mm on the scanning surface. Further, the focusing positions (focal positions) on the scanning surface of the first laser beam La and the second laser beam Lb deviate up to 1 mm, so it becomes necessary to deepen the focusing depth.

Moreover, when each beam is irradiated on two positions on the recording medium 14 separated by up to 24 mm, it takes time to draw from the drawing with the first laser beam La to that with the second laser beam Lb at the next position. For this reason, the device is easily affected by factors such as speed irregularities and vibrations of the spinner mirror device 16 when the spinner mirror device 16, which is the optical deflector, moves in the sub-scanning direction. As a result, recording irregularities are likely to occur. In order to avoid this, it is necessary to at least make the beam separation width of the sub-scanning direction several pixels wide.

In contrast to this, in a case where the uniaxial crystal optic element 28 in the inner drum exposure device 10 placed in front of the spinner mirror device 16 is formed from a quartz, by making the thickness of the quartz plate 1.740 mm, the first laser beam La and the second laser beam Lb can be made to focus in the sub-scanning direction at the separation of a one-pixel interval (10.58 µm). Accordingly, it does not to take time to draw with the second laser beam Lb at the next position after drawing with the first laser beam La. For this reason, speed irregularities and vibrations of the spinner mirror device 16 when moving the spinner mirror device 16 are unlikely to occur and as a result, the generation of recording irregularities can be avoided. This is a very significant effect.

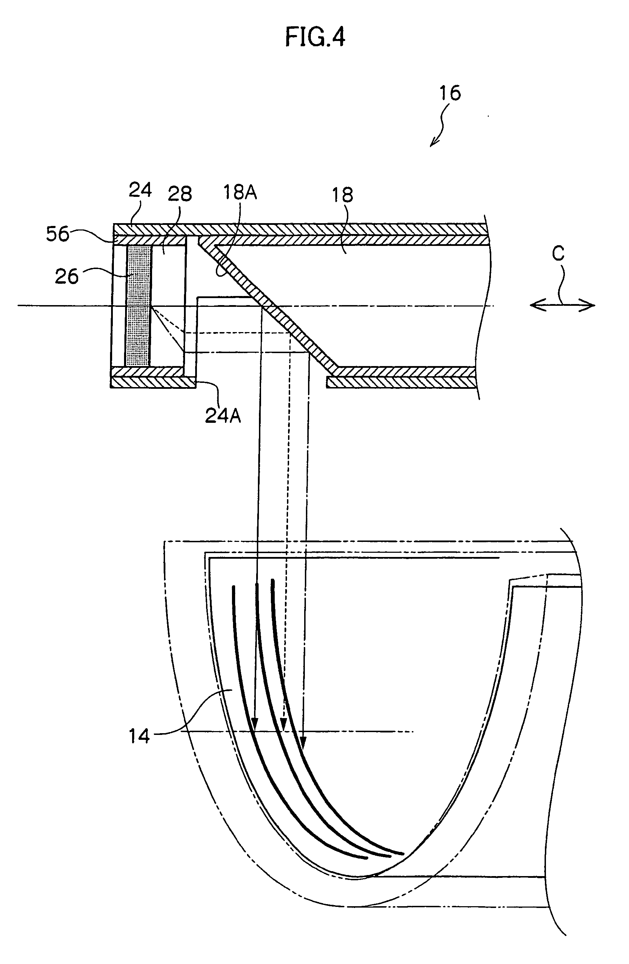

Next, other structural examples relating to the quarter wavelength plate 26 and the uniaxial crystal optic element 28 attached to the spinner mirror device 16 in the scanning optical system of the inner drum exposure device of the above-described embodiment will be explained while referring to Fig. 4.

As shown in Fig. 4, a small cylindrical retaining element 56 is attached to the cylindrical inner portion of the holder 24, which is fixed so as to turn uniformly with the rotary shaft element 18 of the spinner mirror device 16. The retaining element 56 is attached in an adjustable position so as to rotate in the rotational direction of the optical deflector. The quarter wavelength plate 26 and uniaxial crystal optic element 28 are set in the cylindrical interior portion of this retaining element 56. These are configured such that the retaining element 56, the quarter wavelength plate 26, and the uniaxial crystal optic element 28 rotate uniformly with the holder 24.

By configuring in this manner, the retaining element 56 is rotated at the necessary angle relative to the holder 24, and the relative rotating positions of the quarter wavelength plate 26 and uniaxial crystal optic element 28 to the rotary shaft element 18 are adjusted. The beam spot intervals of the sub-scanning direction on the scanning surface can be adjusted, e.g., from the positions shown with alternately long and short dashed lines to the positions shown with dotted lines, such as seen in Fig. 4.

In cases where the invention is thus configured, the interval between the two beams can be fine tuned by adjusting the rotation of the retaining element 56 and quarter wavelength plate 26, and the uniaxial crystal optic element 28. When configuring in this manner, the relative positions of the main scanning direction of the first laser beam La and the second laser beam Lb deviate in response to the rotation adjustment, so in response, the timing of the drawing of the first laser La and the second laser Lb are adjusted as well.

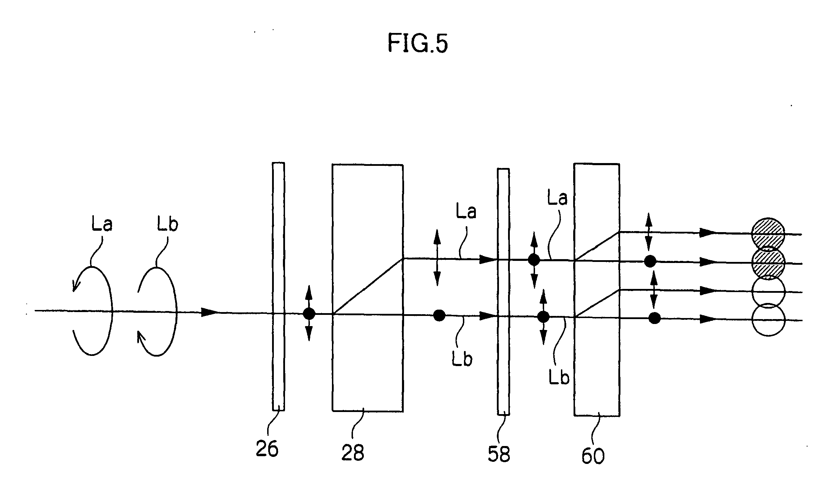

Next, further structural examples relating to the scanning optical system of the spinner mirror device of the inner drum exposure device of the above-described embodiment will be explained while referring to Fig. 5.

The scanning optical system that has this spinner mirror device has a quarter wavelength plate 26 set so as to continue to a first uniaxial crystal optic element 28 on the side on the optical path upstream of the reflective mirror surface 18A, as shown in Fig. 5. It also has a half wavelength plate 58 that serves as a polarized light control element and a second uniaxial crystal optic element 60 that serves as a splitting element. The quarter wavelength plate 26, first uniaxial crystal optic element 28, half wavelength plate 58, and second uniaxial crystal optic element 60 are configured so as to turn uniformly with the reflective mirror surface 18A.

With the scanning optical system that has the spinner mirror device configured as described above, when the first laser beam La and the second laser beam Lb, which are coaxially integrated and respectively converted to right-handed circularly polarized light and left-handed circularly polarized light, are transmitted through the quarter wavelength plate 26 of the scanning optical system from the optical system of the light source, these are converted to linearly-polarized light beams that cross each other. When these are transmitted through the uniaxial crystal optic element 28, they are each split into a first laser beam La and a second laser beam Lb in the sub-scanning direction.

Moreover, the first laser beam La and a second laser beam Lb split in the sub-scanning direction are transmitted through a half wavelength plate 58 that serves as a polarized light control element. At this time, the polarized light direction of the beams rotates 45°. Further, when these are transmitted through the second uniaxial crystal optic element 60 acting as the splitting element, the first laser beam La is split at approximately uniform luminosity in the sub-scanning direction while the second laser beam Lb is split at approximately uniform luminosity in the sub-scanning direction.

The scanning optical system that has this spinner mirror device has the first quarter wavelength plate 26 and the first uniaxial crystal optic element 28 arranged on the optical path on the upstream side of the reflective mirror surface 18A. These split the first laser beam La and the second laser beam Lb, which were split in the sub-scanning direction, and respectively make the beams into circularly polarized light with a second quarter wavelength plate that serves as a polarized light control element arranged on the optical path further to the downstream side than the first uniaxial crystal optic element 28. Further, the invention can be configured such that each respective beam of polarized light (the first laser beam La and the second laser beam Lb) split by the second uniaxial crystal optical element acting as a splitting element positioned on the downstream side of the optical path are each split at even luminosities in the sub-scanning direction.

With the scanning optical system that has the spinner mirror device configured as described above, the light focusing spot diameter of the light beam of the first laser beam La prior to being split in the sub-scanning direction at even luminosity and the light focusing spot diameter of the light beam of the second laser beam Lb prior to being split in the sub-scanning direction at even luminosity are each made smaller than the recording pixels. By making the separation width of the second uniaxial crystal optic element 60 acting as a splitting element in the range of approximately half a pixel, a state where a shape relative to the sub-scanning direction can be made closer to a shortened shape can be attained. Further, a spot shape can be attained in a sharp narrowed state relative to the main scanning direction (i.e., where the state of the edge portion of the beam spot becomes precipitous). Accordingly, the recording pixel quality is improved.

## Claims

1. An inner drum exposure device comprising:
an optical system on a light sources side (30A, 30B) that, with a polarized light beam splitter (52), polarizes and integrates two laser beams (La, Lb) that are each made independent, modulated, and projected based on image signals from the light source side (30A, 30B), and that makes the two laser beams into right-handed circularly polarized light and left-handed circularly polarized light and projects them towards a scanning optical system (16-28);
a quarter wavelength plate (26) set on an optical path of the scanning optical system that converts the right-handed circularly polarized light and left-handed circularly polarized light incident from the light source side optical system into linearly-polarized light such that the two laser beams cross each other; and
a uniaxial crystal (28) that projects the two laser beams that were converted with the quarter wavelength plate (26) into linearly-polarized light that cross each other such that the ejected beams of principal rays are each projected from differing positions parallel to one another, wherein
the quarter wavelength plate (26) and the uniaxial crystal (28) are made to be uniform and set at a rotational axis component (56) of an optical deflector (18) arranged at the scanning optical system, **characterized in that**
a detecting component (46) arranged so as to detect the positions of each focusing spot of the two laser beams (La, Lb) polarized and integrated with the polarized light beam splitter (52) of the optical system on the light source side; and two angle adjusting prisms (40, 42) are arranged at the optical system of the light source side, that adjusts the angle of one laser beam (Lb) and adjusts so that a position difference between the two laser beams detected with the detecting component (46) becomes a preset value.

2. The inner drum exposure device of claim 1, wherein the adjusting component (40, 42) that adjusts the angle of the laser beam is adapted to perform the adjustment when a recording medium is not being exposure recorded.

## Patentansprüche

1. lnnentrommel-Belichtungsvorrichtung, umfassend:
eine lichtquellenseitige (30A, 30B) Optik, die mit einem polarisierten Lichtstrahlteiler (52) zwei Laserstrahlen (La, Lb), die jeweils basierend auf Bildsignalen von der Lichtquellenseite (30A, 30B) unabhängig erzeugt, moduliert und projiziert werden, polarisiert und integriert, und die die beiden Laserstrahlen zu rechtsgängig kreisförmig polarisiertem Licht und linksgängig kreisförmig polarisiertem Licht macht und sie in Richtung einer Abtastoptik (16-28) projiziert;
ein Viertelwellenlängen-Plättchen (26), das sich in einem optischen Weg der Abtastoptik befindet und das rechtsgängig kreisförmig polarisierte Licht und das linksgängig kreisförmig polarisierte Licht, welches von der lichtquellenseitigen Optik einfällt, umwandelt in linear polarisiertes Licht, so dass die beiden Laserstrahlen einander kreuzen; und
einen uniaxialen Kristall (28), der die beiden Laserstrahlen, die mit dem Viertelwellenlängen-Plättchen (26) in linear polarisiertes Licht umgewandelt wurden und die einander kreuzen, derart projiziert, dass sie abgegebenen Bündel der Hauptstrahlen jeweils aus verschiedenen Positionen parallel zueinander projiziert werden, wobei das Viertelwellenlängen-Plättchen (26) und der uniaxiale Kristall (28) uniform ausgebildet sind und an einer Drehachsenkomponente (56) eines optischen Deflektors (18), der an der Abtastoptik angeordnet ist, eingestellt sind, **dadurch gekennzeichnet, dass** eine Detektierkomponente (46) zum Detektieren der Stellen jedes Fokussierflecks der beiden Laserstrahlen (La, Lb), die mit dem polarisierten Lichtstrahlteiler (52) der lichtquellenseitigen Optik polarisiert und integriert wurden, vorgesehen ist, und zwei Winkeljustierprismen (40, 42) an der lichtquellenseitigen Optik angeordnet sind, die den Winkel eines Laserstrahls (Lb) justieren und derart einjustieren, dass eine mit der Detektierkomponente (46) nachgewiesene Lageabweichung zwischen den beiden Laserstrahlen zu einem voreingestellten Wert wird.

2. Innentrommel-Belichtungsvorrichtung nach Anspruch 1, bei der die Justierkomponente (40, 42), die den Winkel des Laserstrahls justiert, dazu ausgebildet ist, die Justierung vorzunehmen, wenn ein Aufzeichnungsträger nicht durch Belichtung beschriftet wird.

## Revendications

1. Dispositif d'exposition de tambour interne comprenant :
un système optique sur un côté de sources lumineuses (30A, 30B) lequel, à l'aide d'un séparateur de faisceau lumineux polarisé (52), polarise et intègre deux faisceaux laser (La, Lb) qui sont chacun rendus indépendants, sont modulés, puis projetés en fonction de signaux image provenant du côté de sources lumineuses (30A, 30B), et lequel convertit les deux faisceaux laser en lumière polarisée circulairement dextrorsum et en lumière polarisée circulairement senestrorsum, puis les projette vers un système optique de balayage (16-28) ;
une plaque quart d'onde (26) réglée sur un trajet optique du système optique de balayage, qui convertit la lumière polarisée circulairement dextrorsum et la lumière polarisée circulairement senestrorsum incidente à partir du système optique sur le côté de source lumineuse en lumière à polarisation linéaire, de sorte que les deux faisceaux laser se croisent, et
un cristal uniaxial (28) projetant les deux faisceaux laser qui ont été convertis à l'aide de la plaque quart d'onde (26) en une lumière à polarisation linéaire et qui se croisent, de sorte que les faisceaux éjectés de rayons principaux sont chacun projetés de positions différentes parallèlement les uns aux autres, dans lequel
la plaque quart d'onde (26) et le cristal uniaxial (28) sont rendus uniformes et sont réglés au niveau d'un composant à axe rotatif (5b) d'un déflecteur optique (18) agencé sur le système optique de balayage, **caractérisé en ce que** :
un composant de détection (46) est apte à détecter les positions de chaque spot de concentration des deux faisceaux laser (La, Lb) polarisés et intégrés à l'aide du séparateur de faisceau lumineux polarisé (52) du système optique sur le côté de source lumineuse, **en ce que** deux prismes de réglage d'angle (40, 42) sont agencés sur le système optique du côté de source lumineuse, ceci adaptant l'angle d'un faisceau laser (Lb) de telle sorte qu'une différence de position entre les deux faisceaux laser détectée avec le composant de détection (46) devienne une valeur préréglée.

2. Dispositif d'exposition de tambour interne selon la revendication 1, dans lequel le composant de réglage (40, 42) adaptant l'angle du faisceau laser est apte à exécuter le réglage lorsqu'un support d'enregistrement ne subit pas d'enregistrement par exposition.
